# EUROPÄISCHE PATENTSCHRIFT

(11) **EP 0 866 950 B1**
(45) Veröffentlichungstag und Bekanntmachung des Hinweises auf die Patenterteilung: **04.07.2001**
(21) Anmeldenummer: 96945360.4
(22) Anmeldetag: 29.10.1996
(51) Int. Cl.: G01F 1/684, G01F 1/692, G01F 1/698, G01F 1/699

(54) **LUFTMASSENMESSER**
AIR MASS METER
DISPOSITIF DE MESURE DE MASSES D'AIR

(30) Priorität: 15.12.1995 DE 19546996
(43) Veröffentlichungstag der Anmeldung: 30.09.1998
(73) Patentinhaber: SIEMENS AKTIENGESELLSCHAFT, 80333 München (DE)
(72) Erfinder: WILDGEN, Andreas, D-93152 Nittendorf (DE)
(86) Internationale Anmeldenummer: DE9602054
(87) Internationale Veröffentlichungsnummer: WO9722856

(56) Entgegenhaltungen:
- EP-A- 0 324 961
- DE-A- 4 238 149
- FR-A- 2 441 834
- GB-A- 2 171 800
- GB-A- 2 179 161

## Beschreibung

Die Erfindung betrifft einen Luftmassenmesser nach dem Oberbegriff von Anspruch 1.

In einer älteren Anmeldung (WO 95/21370, unser Zeichen GR 94 P 1060 P)ist ein Luftmassenmesser beschrieben, der einen Temperaturfühlerwiderstand und einen Sensorheizwiderstand aufweist. Der Sensorheizwiderstand wird auf eine vorgegebene Übertemperatur im Vergleich zu der am Temperaturfühlerwiderstand gemessenen Temperatur aufgeheizt. Der elektrische Strom, der durch den Sensorheizwiderstand fließt, beziehungsweise die Spannung, die an einem in Serie liegenden temperaturunabhängigen Widerstand abfällt, sind im Quadrat direkt proportional zu der Heizleistung, die in dem Sensorheizwiderstand abgegeben wird. Somit kann aus diesen Größen der Luftmassenstrom ermittelt werden.

Schmutzablagerungen an der in Strömungsrichtung stirnseitig liegenden Anströmfläche des Sensorheizwiderstands können zu Veränderungen des Wärmeübergangs auf dem Sensorheizwiderstand führen. Mit zunehmenden Schmutzablagerungen ergibt sich ein immer größer werdender Meßfehler.

Ein bekannter Luftmassenmesser (DE 38 38 466 A1) weist einen Temperatursensor und ein Heizelement auf, das ein streifenförmiges Substrat und einen auf dem Substrat aufgebrachten Heizwiderstand aufweist. An einer der Strömungsrichtung der Luft entgegengerichteten Stirnfläche des Substrats ist ein Vorkörper angeordnet. Der Vorkörper ist so ausgebildet, daß sich bereits im Neuzustand des Luftmassenmessers ein Strömungsverlauf um das Substrat einstellt, wie er sich nach einiger Betriebszeit ohne den Vorkörper durch Schmutzablagerungen einstellt. Schmutzablagerungen an dem Vorkörper können jedoch zu einer Veränderung des Wärmeübergangs auf dem Heizwiderstand führen, so daß sich mit zunehmenden Schmutzablagerungen ein immer größer werdender Meßfehler ergibt.

Ein bekannter Luftmassenmesser (DE 42 28 524 C1) weist zum Beseitigen von Schmutzablagerungen einen U-förmigen Bügel auf, der in einem Rahmen beweglich gelagert ist und mit einem ersten freien Endbereich an der Anströmfläche des Sensorheizwiderstands streift. Ein zweiter freier Endbereich des Bügels wird durch die Luftströmung im Ansaugkanal angetrieben. Dadurch verändert sich die Position des ersten freien Endbereichs mit der Geschwindigkeit der Luftströmung. Der erste Endbereich des Bügels beseitigt somit mechanisch Schmutzablagerungen auf der Anströmfläche. Dieser Luftmassenmesser hat jedoch den Nachteil, daß er aufwendige mechanische Teile zum Beseitigen der Schmutzabglagerungen benötigt.

GB2171800 offenbart einen Luftmassenmesser für den Ansaugkanal einer Brennkraftmaschine mit einem Temperatursensor und einem Heizelement, das ein streifenförmiges Substrat und einen einseitig auf dem Substrat aufgebrachten Heizwiderstand aufweist. Stromabwärts des Heizelements ist ein Körper angebracht, der das Ansprechverhalten verbesseren und gegen Rückzündungen schützen soll.

Die Aufgabe der Erfindung ist es, einen Luftmassenmesser derart auszubilden, daß Meßfehler als Folge von Schmutzablagerungen auf einer stirnseitigen Anströmfläche eines Heizelements verringert werden.

Die Aufgabe wird erfindungsgemäß durch die Merkmale von Patentanspruch 1 gelöst. Vorteilhafte Ausgestaltungen der Erfindung sind in den Unteransprüchen gekennzeichnet.

Ausführungsbeispiele der Erfindung werden anhand der schematischen Zeichnung näher erläutert. Es zeigen:
- Figur 1:: ein Blockschaltbild eines Luftmassenmessers gemäß der Erfindung,
- Figur 2:: ein Heizelement des Luftmassenmessers nach Fig.1,
- Figur 3a, b:: den Strömungsverlauf der Luft bei einem bekannten Heizelement ,
- Figur 4a, b:: den Strömungsverlauf der Luft bei dem Heizelement nach Fig. 2 ohne Störkörper,
- Figur 5:: den Strömungsverlauf der Luft bei dem Heizelement nach Fig. 2 mit Störkörper,
- Figur 6:: ein Blockschaltbild einer zweiten Ausführungsform des Luftmassenmessers,
- Figur 7:: ein Diagramm, in dem der relative Fehler verursacht durch Schmutzablagerungen in Abhängigkeit von dem Luftdurchsatz aufgetragen ist.

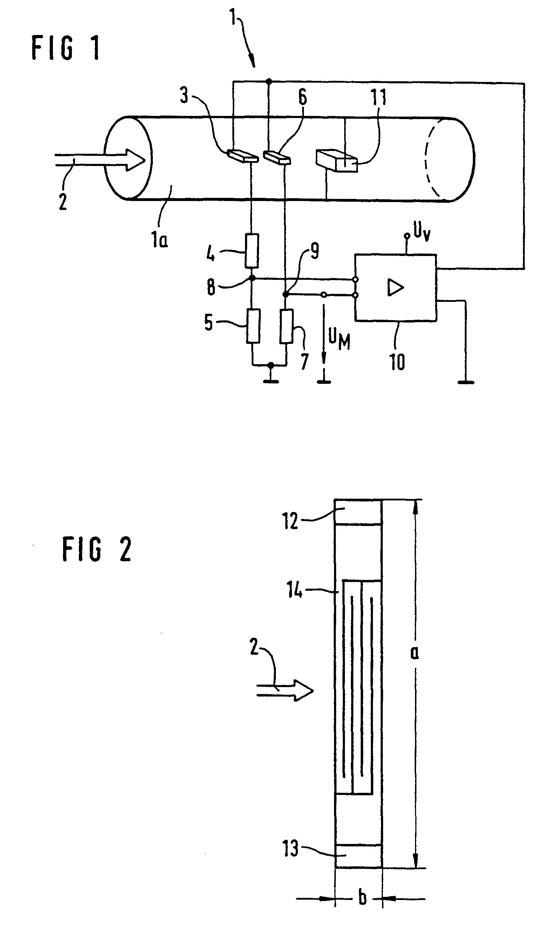

Ein Luftmassenmesser 1 (Figur 1) weist ein Kanalelement la auf, das einen Abschnitt des Ansaugkanals einer Brennkraftmaschine bildet. Das Kanalelement la wird von Luft in der mit einem Pfeil 2 bezeichneten Richtung durchströmt. In einem ersten Brückenzweig einer Meßbrücke, die Bestandteil einer Auswerteschaltung des Luftmassenmessers 1 ist, liegen ein Temperatursensor 3, ein erster Widerstand 4 und ein zweiter Widerstand 5. In einem zweiten Brückenzweig der Meßbrücke liegt ein Heizelement 6, das auf einem Substrat aus Glas einen Heizwiderstand aufweist, und ein dritter Widerstand 7. Mit einem ersten Abgriffspunkt 8 zwischen dem ersten und dem zweiten Widerstand 4,5 und einem zweiten Abgriffspunkt 9 zwischen dem Heizelement 6.und dem dritten Widerstand 7 ist ein Verstärker 10 verbunden, der bei einer auftretenden Verstimmung der Brücke den Brückenstrom so regelt, daß die Brückendiagonalspannung wieder ausgeglichen ist, d. h. bis die Spannungsdifferenz zwischen dem ersten und dem zweiten Abgriffspunkt 8,9 einen vorgegebenen Wert erreicht (z.B. 2mV).

Der Spannungabfall über dem dritten Widerstand 7 ist somit ein Maß für den am Heizelement 6 vorbeiströmenden Luftmassenstrom und bildet ein Luftmassensignal U_{M}.

Stromabwärts des Heizelements 6 ist im Kanalelement 1a ein Störkörper 11 angeordnet und beispielsweise quaderförmig derart ausgebildet, daß er einen Rückstau der Luftströmung ( im folgenden mit Stauwirkung bezeichnet) im Bereich des Heizelements 6 zur Folge hat.

Das Heizelement 6 (Figur 2), das quaderförmig ausgebildet ist, weist Kontaktstellen 12, 13 und eine mäanderförmige Widerstandsbahn 14 auf, die senkrecht zur Strömungsrichtung 2 verläuft. Die Widerstandsbahn 14 besteht aus Platin, Molybdän oder Nickel und ist auf ein Substrat aus Glas aufgebracht. Die Breite der Widerstandsbahn 14 nimmt in Strömungsrichtung 2 der Luft zu, wodurch ihr Widerstand abnimmt und damit auch die Heizleistung abnimmt. Da auch die Temperatur der Luft durch die Heizwirkung des Heizelements 6 in Strömungsrichtung 2 zunimmt, wird bei einer laminaren Strömung so eine in etwa gleiche Temperatur auf der gesamten Widerstandsbahn 14 erreicht. Dadurch wird die Ansprechzeit des Heizelements 6 auf eine Änderung des Luftmassenstroms sehr gering gehalten. Bei dem Heizelement hat in diesem Ausführungsbeispiel die Breite a den Wert 9 mm, die Länge b in Strömungsrichtung den Wert 0,6 mm und die Höhe den Wert 0,15 mm.

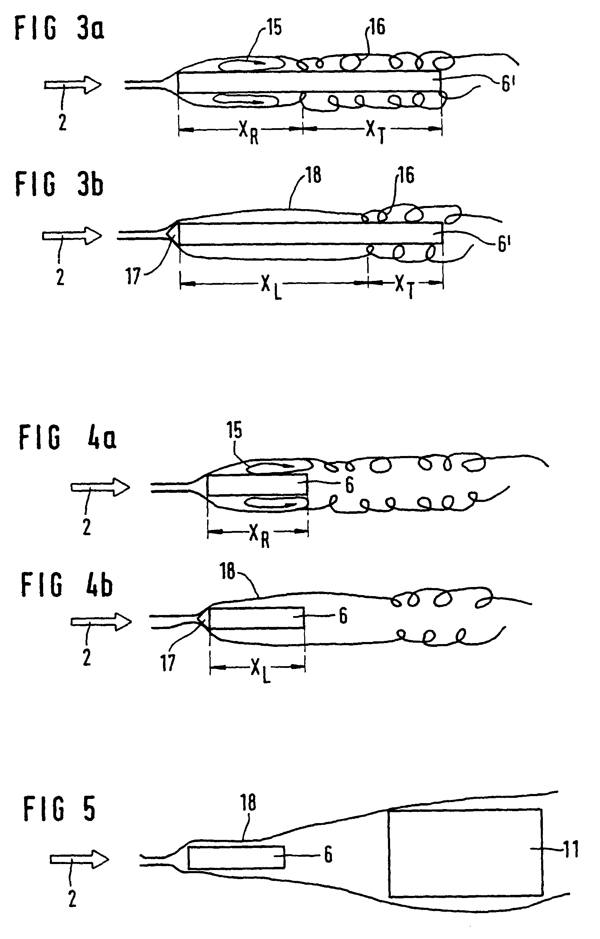

In den Figuren 3a und 3b sind die Strömungsverläufe im Bereich eines Heizelements 6' aus der älteren Patentanmeldung bei der gleichen Strömungsgeschwindigkeit der Luft dargestellt. Das Heizelement 6' ist in dem Kanalelement la angeordnet.

Figur 3a zeigt das unverschmutzte Heizelement 6'. In einem Bereich der Länge X_{R} weist die Stömung auf der Oberfläche des Heizelements 6' Rezirkulationen 15 auf. Als Rezirkulationen werden langgestreckte Wirbel bezeichnet. In dem Bereich X_{R} der Rezirkulationen 15 findet ein verminderter Wärmeübergang auf der Oberfläche des Heizelements 6' statt, da erwärmte Luft parallel zur Oberfläche des Heizelements 6' hin- und herströmt. In einem Bereich X_{T} weist die Strömung Turbulenzen 16 auf. Dort findet ein erhöhter Wärmeübergang auf der Oberfläche des Heizelements 6' statt, da immer wieder neue Luftmassen auf die Oberfläche treffen.

Schmutzablagerungen 17 (Figur 3b) bilden sich im Bereich der Anströmfläche des Heizelements 6' aufgrund von Schmutzpartikeln, die in der Ansaugluft vorhanden sind. Die Schmutzablagerungen 17 bilden anfangs immer größer werdende Kegel, die schließlich zu einem halbkreisförmigen Schmutzkörper zusammenwachsen. Durch die Schmutzablagerungen verändert sich der Strömungswiderstand des Heizelements 6'. Dadurch verkleinert sich bei gleicher Strömungsgeschwindigkeit der Bereich X_{T}, in dem turbulente Strömungen auftreten. Der Bereich X_{R} in dem Rezirkulationen 15 auftreten verschwindet gänzlich. Stattdessen tritt in dem Bereich X_{L} des Heizelements dann eine laminare Strömung 18 auf. Der Wärmeübergang im Bereich X_{L} der laminaren Strömung 18 ist größer als bei einer Rezirkulation 15, jedoch kleiner als bei einer turbulenten Strömung. Die Schmutzablagerungen 17 führen somit zu einer Abnahme des Wärmeübergangs auf dem Heizelement 6', was zu einem Meßfehler führt.

In Figur 4a und 4b ist das Heizelement 6 dargestellt. Es ist geometrisch derart ausgebildet, daß bei allen betriebsrelevanten Strömungsgeschwindigkeiten der Luft unabhängig von Schmutzablagerungen 17 auf der Anströmfläche keine turbulenten Strömungen auf der Oberfläche des Heizelements 6 auftreten.

Turbulente Strömungen auf der Oberfläche des Heizelements 6 können durch eine minimale Höhe der Anströmfläche und eine minimale Länge b des Heizelements 6 in Strömungsrichtung verhindert werden. Die Länge b und die Höhe des Heizelements 6 müssen jedoch Mindestwerte aufweisen, um die mechanische Stabilität des Heizelements 6 zu gewährleisten.

Untersuchungen ergaben überraschend, daß bei einer Länge b in Strömungsrichtung 2, die in dem Bereich von 0,5 bis 0,9 mm liegt, und bei einem Verhältnis von der Länge b zur Höhe der Anströmfläche im Bereich von 3 bis 6, keine turbulente Strömungen auf der Oberfläche des Heizelements auftreten. Bei diesen Ausmaßen ist die mechanische Stabilität des Heizelements noch gewährleistet.

Figur 4a zeigt die Strömungsverhältnisse bei dem unverschmutzten Heizelement. Auf der gesamten Oberfläche treten Rezirkulationen auf.

Figur 4b zeigt das Heizelement 6 mit Schmutzablagerungen 17. Das Heizelement 6 ist von rein laminarer Strömung 18 umgeben. Somit wird bei dieser Anordnung der Meßfehler vorwiegend durch das Verschwinden der Rezirkulationen 15 und der damit verbundenen Erhöhung des Wärmeübergangs beeinflußt.

In Figur 5 ist stromabwärts des Heizelements 6 der Störkörper 11 angeordnet. Der Störkörper 11 ist in diesem Ausführungsbeispiel derart quaderförmig ausgebildet und zu dem Heizelement beabstandet, daß er eine Stauwirkung auf das Heizelement 6 ausübt. Durch diese stromaufwärts gerichtete Stauwirkung befindet sich das Heizelement 6 bereits im unverschmutzten Zustand in einer laminaren Strömung 18. Somit ändert sich bei dieser Anordnung der Wärmeübergang durch die Veränderung seines Strömungswiderstands in Folge von Schmutzablagerungen 17 auf der Anströmfläche des Heizelements 6 nur sehr wenig. Bei den betriebsrelevanten Strömungsgeschwindigkeiten bildet sich um das Heizelement 6 und den Störkörper 11 ein Strömungsverlauf aus, bei dem der Wärmeübergang vom Heizelement 6 an die umströmende Luft durch Schmutzablagerungen an der Anströmfläche des Heizelements 6 nur vernachlässigbar beeinflußt wird.

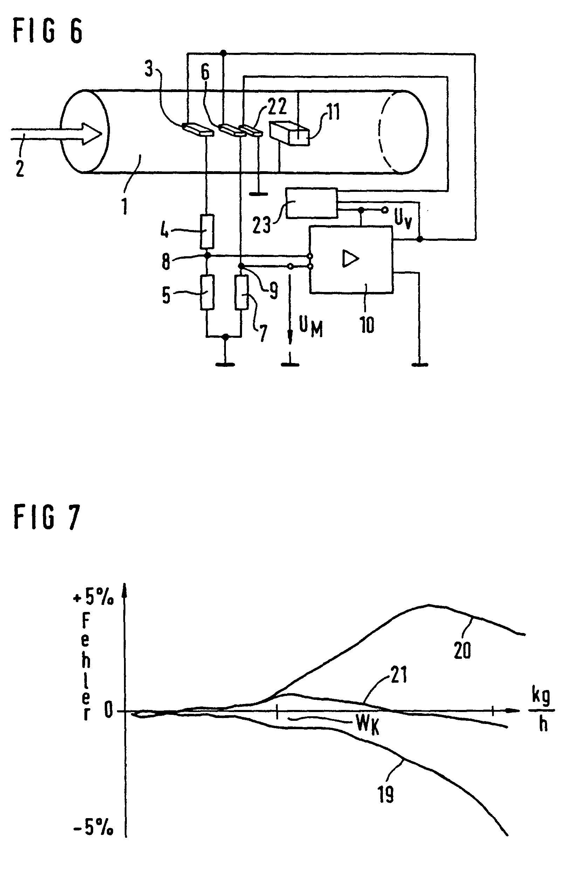

In Figur 7 ist der relative Fehler durch Schmutzablagerungen 17 in Abhängigkeit von dem Luftdurchsatz kg/h durch das Kanalelement la des Luftmassenmessers 1 nach etwa einhunderttausend gefahrenen Kilometern aufgetragen. Eine erste Kurve 19 stellt den Fehler bei dem Heizelement 6' dar, eine zweite Kurve 20 den Fehler bei dem Heizelement 6 ohne den stromabwärts angeordneten Störkörper 11 und eine dritte Kurve 21 den Fehler bei dem Heizelement 6 mit dem stromabwärts angeordneten Störkörper 11. Bei einem Luftdurchsatz kg/h der unter einem kritischen Wert Wₖ (z.B. 200 kg/h) liegt, ist der relative Fehler bei den oben genannten Ausführungsformen des Luftmassenmessers 1 sehr gering. Oberhalb des kritischen Wertes Wₖ nimmt der relative Fehler bei der Ausführungsform des Luftmassenmessers 1 mit dem Heizelement 6 ( vgl. Kurve 20) stark zu. Aus Figur 7 ist klar ersichtlich, daß der relative Fehler bei der dritten Kurve 21 minimal ist. Somit wirken sich Schmutzablagerungen auf dem Heizelement 6 mit dem stromabwärts angeordneten Heizelement nur noch vernachlässigbar auf das Meßergebnis aus.

Darüber hinaus verringert sich bei dem Heizelement 6 durch die Verminderung der Gesamtfläche des Heizelements 6 der Meßfehler in Folge von Wärmestrahlung.

Bei einer zweiten Ausführungsform des Luftmassenmessers 1 (Figur 6) ist stromabwärts des Heizelements 6 zusätzlich ein Nachheizelement 22 angeordnet. Der Luftmassenmesser 1 weist darüber hinaus eine Steuereinheit 23 auf, die in Abhängigkeit von dem Ausgangssignal des Verstärkers 10 das Nachheizelement 22 derart aufheizt, daß rückströmende Luftmassen so erwärmt werden, daß sie keine Wärme von dem Heizelement 6 aufnehmen. Dadurch wird eine Verfälschung des Luftmassensignals U_{M} durch rückströmende Luftmassen, wie sie insbesondere bei Pulsationen der Luft im Ansaugkanal auftreten können, vermieden.

## Patentansprüche

1. Luftmassenmesser (1) für den Ansaugkanal einer Brennkraftmaschine mit einem Temperatursensor (3), der die Temperatur der Luft im Ansaugkanal erfaßt, und einem Heizelement (6), das ein streifenförmiges Substrat und einen einseitig auf dem Substrat aufgebrachten Heizwiderstand aufweist, wobei
- ein Storkörper (11) stromabwärts des Heizelements (6) angeordnet ist, und
- das Heizelement (6) und der Störkörper (11) geometrisch derart ausgebildet und voneinander beabstandet sind, daß der Wärmeübergang vom Heizelement (6) an die umströmende Luft bei den betriebsrelevanten Strömungsgeschwindigkeiten durch Schmutzablagerungen (17) an der stirnseitigen Anströmfläche des Heizelements (6) nur vernachlässigbar beinflußt wird der Gestalt, daß der Betrag des relativen Fehlers durch Schmutzablagerungen nach einer vorgegebenen Betriebsdauer nicht stark zunimmt oberhalb eines kritischen Luftdurchsatzes.

2. Luftmassenmesser nach Anspruch 1, dadurch gekennzeichnet, daß das Heizelement (6) quaderförmig ausgebildet ist, daß die Länge (b) des Heizelements (6) in Strömungsrichtung (2) in dem Bereich von 0,5 bis 0,9 mm liegt, und daß das Verhältnis von der Länge (b) zur Höhe der Anströmfläche im Bereich von 3 bis 6 liegt.

3. Luftmassenmesser nach Anspruch 2, dadurch gekennzeichnet, daß die Länge (b) den Wert 0,6 mm, die Höhe der Anströmfläche den Wert 0,15 mm und die Breite (a) den Wert 9 mm aufweisen.

4. Luftmassenmesser nach Anspruch 1, dadurch gekennzeichnet, daß das Substrat des Heizelements (6) aus Glas besteht.

5. Luftmassenmesser nach Anspruch 1, dadurch gekennzeichnet, daß der Störkörper (11) aus Metall besteht.

6. Luftmassenmesser nach Anspruch 1, dadurch gekennzeichnet, daß der Störkörper (11) in Strömungsrichtung (2) fluchtend zum Heizelement (6) angeordnet ist.

7. Luftmassenmesser nach Anspruch 1, dadurch gekennzeichnet, daß der Heizwiderstand (6) in einer mäanderförmigen Widerstandsbahn auf dem Substrat angeordnet ist und aus Platin besteht.

8. Luftmassenmesser nach Anspruch 1, dadurch gekennzeichnet, daß zwischen dem Heizelement (6) und dem Störkörper (11) ein Nachheizelement (22) angeordnet ist.

## Claims

1. Air mass meter (1) for the intake port of an internal combustion engine, with a temperature sensor (3) which records the temperature of the air in the intake port, and with a heating element (6) which has a strip-like substrate and a heating resistor applied to one side of the substrate, a disturbance body (11) being arranged downstream of the heating element (6), and the heating element (6) and the disturbance body (11) being of a geometric design and at a distance from one another such that, at the operationally relevant flow velocities, heat transmission from the heating element (6) to the air flowing round it is influenced only negligibly by deposits of dirt (17) on the end-face onflow surface of the heating element (6), in such a way that the size of relative error due to deposits of dirt does not increase sharply above a critical air throughput after a predetermined operating period.

2. Air mass meter according to Claim 1, characterized in that the heating element (6) is of parallelepipedic design, in that the length (b) of the heating element (6) in the direction of flow (2) is in the range of 0.5 to 0.9 mm, and in that the ratio of the length (b) to the height of the onflow surface is in the range of 3 to 6.

3. Air mass meter according to Claim 2, characterized in that the length (b) has the value 0.6 mm, the height of the onflow surface has the value 0.15 mm and the width (a) has the value 9 mm.

4. Air mass meter according to Claim 1, characterized in that the substrate of the heating element (6) consists of glass.

5. Air mass meter according to Claim 1, characterized in that the disturbance body (11) consists of metal.

6. Air mass meter according to Claim 1, characterized in that the disturbance body (11) is arranged in line with the heating element (6) in the direction of flow (2).

7. Air mass meter according to Claim 1, characterized in that the heating resistor (6) is arranged in a meander-like resistance path on the substrate and consists of platinum.

8. Air mass meter according to Claim 1, characterized in that a reheating element (22) is arranged between the heating element (6) and the disturbance body (11).

## Revendications

1. Dispositif (1) de mesure de masses d'air pour le conduit d'aspiration d'un moteur à combustion interne, comprenant un capteur (3) de température, qui repère la température de l'air dans le conduit d'aspiration, et un élément (6) de chauffage qui comporte un substrat en forme de bande et une résistance de chauffage déposée d'un côté sur le substrat,
- un obstacle (11) étant disposé en aval de l'élément (6) de chauffage, et
- l'élément (6) de chauffage et l'obstacle (11) étant géométriquement tels et étant à une distance l'un de l'autre telle que le transfert de chaleur de l'élément (6) de chauffage à l'air qui passe autour de lui aux vitesses d'écoulement auxquelles ont peut s'attendre en fonctionnement n'est influencé que d'une manière négligeable par des dépôts (17) de saletés sur la surface frontale de l'élément (6) de chauffage sur laquelle afflue l'air, de sorte que la valeur absolue de l'erreur relative provoquée par des dépôts de saletés après une durée de fonctionnement prescrite n'augmente pas beaucoup au-dessus d'un débit d'air critique.

2. Dispositif de mesure de masses d'air suivant la revendication 1, caractérisé en ce que l'élément (6) de chauffage est constitué sous la forme d'un parallélépipède, en ce que la longueur (b) de l'élément (6) de chauffage dans le sens (2) d'écoulement est de l'ordre de 0,5 à 0,9 mm, en ce que le rapport de la longueur (b) à la hauteur de la surface sur laquelle afflue l'air est de l'ordre de 3 à 6.

3. Dispositif de mesure de masses d'air suivant la revendication 2, caractérisé en ce que la longueur (b) a la valeur de 0,6 mm, la hauteur de la surface sur laquelle afflue l'air a la valeur de 0,15 mm et la largeur (a) a la valeur de 9 mm.

4. Dispositif de mesure de masses d'air suivant la revendication 1, caractérisé en ce que le substrat de l'élément (6) de chauffage est en verre.

5. Dispositif de mesure de masses d'air suivant la revendication 1, caractérisé en ce que l'obstacle (11) est en métal.

6. Dispositif de mesure de masses d'air suivant la revendication 1, caractérisé en ce que l'obstacle (11) est aligné avec l'élément (6) de chauffage dans le sens (2) d'écoulement.

7. Dispositif de mesure de masses d'air suivant la revendication 1, caractérisé en ce que la résistance (6) de chauffage est constituée d'une piste de résistance sinueuse sur le substrat et est en platine.

8. Dispositif de mesure de masses d'air suivant la revendication 1, caractérisé en ce qu'il est interposé entre l'élément (6) de chauffage et l'obstacle (11) un élément (22) de post-chauffage.
